# EUROPEAN PATENT APPLICATION

(11) **EP 3 742 361 A1**
(43) Date of publication of application: **25.11.2020**
(21) Application number: 20153268.6
(22) Date of filing: 23.01.2020
(51) Int. Cl.: G06Q 10/02

(54) **A METHOD FOR AUTOMATED SELECTION OF TRAVELLING COMPANIONS WHEN BUYING TRANSPORT TICKETS AND A DEVICE FOR ITS IMPLEMENTATION**

(30) Priority: 23.05.2019 RU 2019115968
(71) Applicant: Amelin, Andrey, 119334 Moscow (RU); Akimov, Evgeny, 123100 Moscow (RU)
(72) Inventor: AMELIN, Andrey, 119334 Moscow (RU)
(74) Representative: Lapienis, Juozas

(57) **Abstract**

A method for automated selection of travelling companions when buying transport tickets and a device for its implementation relate to data processing systems, in particular to buyer profile analysis and can be used in the systems of booking air tickets and railway sleeper tickets. The invention is aimed at solving the technical problem of enlarging the toolbox of technical means for booking by taking into account the preferences of the passengers regarding the characteristics of the closest travelling companions, as well as providing a device that implements this task. The method comprises entering a ticket list offered by the carrier into a computer system of a processing centre, viewing said list by the buyers, their identifying themselves and making a payment for the ticket for the selected trip. Following payment the passenger enters the information about one's preferences regarding the location in the cabin including details of the companions in the cabin, after the process of accepting orders for the trip is completed the arranging of seats in the cabin is performed which corresponds to the greatest extent possible to the preferences in the order. The technical effect is a possibility of taking into account the preferences of a passenger regarding a seat and the characteristics of the companions in the cabin.

## Description

The invention relates to data processing systems for transport ticket reservation, in particular to buyer profile analysis and can be used in the systems of booking air tickets and railway sleeper tickets.

For convenience and clear understanding of the essence of the claimed technical solution complete forms and definitions of some designations, symbols and/or terms used hereinafter are provided below.

Information refers to a combination of all possible data with a possibility of their transformation and decomposition into minimum elements, for instance, true and/or false.

Computer code refers to an electromagnetic signal transmitted via physical communication channels and/or stored on physical media, being equivalent to a minimum information element.

Sequence and/or combination of computer codes refer to a set of electromagnetic signals transmitted via physical communication channels and/or stored on physical media and being equivalent to arrays of information in various amounts.

Equivalence of a sequence and/or combination of computer codes to an array of information refers to their one-to-one mapping, namely a technical possibility of their one-to-one transformation by means of a corresponding device.

Further, unless otherwise specified, the operations on information of the claimed method should be read as operations on sequences of the computer codes being equivalent thereto.

Booking system is an automated system which provides information on available options in response to an inquiry about information on transportation options available for purchase, and which makes a transportation reservation according to an incoming order upon a receipt of a transportation order. The following may serve as examples of information source: GDS, server of RR or a ticket agency.

GDS refers to the Global Distribution System. There are several main GDS worldwide: 5 international (Sabre, Amadeus, Galileo, Worldspan, Gabriel - all being air travel) and 3 Russian (Sirena 2000, Sirena 2, 3 - for air travel and Express - for railway), each having its own interface.

The interface for interworking with external networks refers to a unit for communication of a device with other devices. It can be exemplified by a network connector, a USB receptacle, as well as Wi-fi, Bluetooth, GSM, GPRS or LTE wireless connection modules.

Connected to ... means a host being configured to transmit electronic codes from it to an object of connection.

Interconnected with... means a host being configured to perform bidirectional electronic code transmission from it to an object of connection and backwards.

Methods of on-line booking through Internet comprising in general the following operations are known (see, for instance, https://vizazavtra.com/rf/bron-aviabiletov-bez-oplaty.html).
1. Order placement
2. Selection of trip on the website of the carrier.
3. Payment and ticket printing

Such method does not enable to select a preferred seat in the cabin and does not take into account preferences of the ticket buyer regarding characteristics of the neighbouring (located at the side of and at the front of - at the rear of the buyer's seat) passengers.

A method for simplifying travel booking for several passengers is known, the method comprising:
1) acceptance by a processor of an inquiry related to the travel, wherein the inquiry related to the travel is related to multiple passengers;
2) determination by the processor of multiple sets of attributes based on the inquiry related to the travel, wherein each of multiple sets of attributes is related to one of multiple passengers;
3) conduct by a syntax analyser of an analysis of the inquiry related to movement in order to receive values of the attributes related to multiple sets of attributes;
4) creation by the processor for each of multiple passengers of at least one attribute among multiple sets of attributes with attribute values;
5) search by a scheduler for each of multiple passengers for possible travel itineraries based on at least one attribute and user preferences;
6) determination of at least one movement itinerary for several passengers for each of multiple passengers, based on the search provided by the processor.

This method is included into the group of inventions "A platform for travel booking for several passengers" composed of the invention "A system for facilitating travel booking for several passengers" and the invention "A method for simplifying travel booking for several passengers, information about which is published, for instance, in the form of the patent CA2988977, G06Q10/00; G06Q10/02; G06Q50/14 with the date 2016-12-15.

Such method takes into account the preferences of the passengers which include the attributes of the trip but does not take into account the preferences of the ticket buyer regarding characteristics of the neighbouring (located at the side of and at the front of - at the rear of the buyer's seat) passengers since keeping record of the preferences is completed before completion of booking for the entire trip.

The closest prior art taken as a prototype of the method is the method for ticket ordering in which the Air Carrier participating in this sale provides the service processing centre with a list of air tickets that it offers wherein the parameters of each air ticket may include: destination, trip number, flight itinerary (in case this flight has intermediate stops), date, time and place of departure, service class, ticket price, number of available seats for said trip etc. The Buyer identifies oneself by means of the Interface for Interaction with the Air Carrier (referred to as automatic transaction machine in the published source), which sends to the service processing centre a request for ticket issuance. After receiving the air ticket list the Interface for Interaction at the first stage displays a list of parameters contained in this list. The Buyer selects from this list a flight destination, mentions a desired date of flight and finally selects a particular trip selecting at the same time a desired service class. Afterwards, the Interface for Interaction composes and provides to the service processing centre a respective message being an order for purchase from the air carrier for air tickets selected by the buyer with an indication of their respective number. Apart from that, the Interface for Interaction incorporates in this message the personal data of the buyer received by the automatic interaction machine as a result of the aforementioned identification of the buyer. Upon receipt of said message the service processing centre accepts this order. In this case the parameters of this order, as stated, include at least the value of this order and/or an identifier of this order. The buyer makes a payment for this order through the Interface for Interaction (refer, for instance, to the description of the patent RU 2174709, G06F 17/60, G06F 19/00, published on 10.10.2001).

Such a technical solution has the following disadvantages.

The buyer of the ticket does not have a chance to influence selection of seat in the cabin and the passenger composition since dealing with the order finishes before the personal data of other buyers become known.

There are known devices that use server computers for booking transport tickets, for instance, a Booking system comprising an electronic self-service device which comprises a data processing computer device as a part thereof and an application that functions in the data processing computer device in order for the electronic self-service device to communicate with the data processing server computer device by means of which the client of the electronic self-service device gains an access to the server the interface of which enables to enter the necessary information for booking, the server computer device comprising an on-line booking module for communication with the available global distribution systems, which performs the necessary actions related to the ticket booking procedure(refer to the description of the patent RU 2365997, G06Q 30/00, G09F 19/00, published on 27.08.2009).

Such a technical solution does not include a device allowing for the parameters of other passengers of the trip to be taken into account in order to implement the preferences contained in a booking order.

The closest prior art taken as a prototype of the device, is "A system for facilitating travel booking for several passengers" included in the group of inventions "A platform for travel booking for several passengers" information about which was published in the form of the patent CA2988977, G06Q10/00; G06Q10/02; G06Q50/14 dated 2016-12-15. The device included in this group comprises:
1) a processor configured to:
   accept an inquiry related to the travel, wherein the inquiry related to the travel is related to multiple passengers;
   determine multiple sets of attributes based on the inquiry related to the travel, wherein each of multiple sets of attributes is related to one of multiple passengers;
   create for each of multiple passengers at least one attribute among multiple sets of attributes with attribute values;
   provide at least one itinerary for several passengers for each of multiple passengers, based on the search;
2) a syntax analyser interacting with the processor and configured to:
   analyse the inquiry related to the travel in order to obtain values for the attributes related to multiple sets of attributes;
3) a scheduler related to the processor and configured to search for each of multiple passengers for possible travel itineraries based on at least one attribute and the preferences of the user.

The main disadvantage of the solutions known in the prior art is the fact that in consequence of using the known booking systems the passenger does not have a chance to get a seat in an aircraft cabin (a train compartment) taking into account the preferences regarding the location of a seat in the cabin (the compartment) and the characteristics of the surrounding passengers since this task is solved not in the course of the passenger using the booking system, but only after the sale of tickets for a trip being finished, that is during a very limited time frame, which is practically unattainable in manual mode.

The technical problem that is solved in the course of implementation of the invention but cannot be solved in the course of implementation or use of the prior art counterparts of the invention is to enlarge the toolbox of technical means of the known booking systems by taking into account the preferences of the passengers regarding the location of a seat in the cabin (the compartment) and regarding the characteristics of the closest travelling companions, as well as to provide a device that implements this task.

In order to solve said technical problem, there is provided a Method for automated selection of travelling companions in which an Air Carrier participating in this sale provides to the service processing centre a list of air tickets that it offers. The Buyer identifies oneself by means of the Interface for Interaction with the Air Carrier, which sends to the service processing centre a request for ticket issuance. After receiving the air ticket list the Interface for Interaction at the first stage displays a list of parameters contained in this list. The Buyer selects from this list a flight destination, mentions a desired date of flight and finally selects a particular trip selecting at the same time a desired service class including the preferences regarding location in the cabin and parameters of the neighbours in the cabin. Afterwards, the Interface for Interaction composes and provides to the service processing centre a respective message being an order for purchase from the air carrier for air tickets selected by the buyer with an indication of their respective parameters. Apart from that, the Interface for Interaction incorporates in this message the personal data of the buyer, including the parameters serving for taking into account the preferences of other passengers as well as of those who wished to participate in the programme of selecting neighbours in the cabin which were also obtained as a result of the aforementioned identification of the buyer. Upon receipt of said message the service processing centre accepts this order. The buyer makes a payment for this order through the Interface for Interaction being used. The process of accepting orders for a trip completed the service processing centre selects the best option for passenger arrangement wherein for each passenger who made use of the automatic seat selection method a seat is determined in the cabin which to the greatest extent possible corresponds to those preferences (parameter values) that he indicated in the order.

To implement the provided Method for automatic selection of travelling companions a processing centre is provided which comprises:
1) a processor configured to:
   accept an inquiry related to the travel, wherein the inquiry related to the travel is related to multiple passengers;
   determine multiple sets of attributes based on the inquiry related to the travel, wherein each of multiple sets of attributes is related to one of multiple passengers;
   *create for each of multiple passengers at least one attribute among multiple sets of attributes with attribute values;*
   provide at least one itinerary for each of multiple passengers, based on the search;
2) a syntax analyser interacting with the processor and configured to:
   analyse the inquiry related to the travel in order to obtain values for the attributes related to multiple sets of attributes;
3) a scheduler related to the processor and configured to search for each of multiple passengers a certain seat in the cabin which to the greatest extent possible corresponds to those preferences (parameter values) that the passenger indicated in the order - at least one attribute and one of the preferences of the user.

The description of the claimed group of inventions does not require drawings or other materials that explain the essence of the invention.

The method for automatic selection of travelling companions may be implemented in the following way.

The Air Carrier in real time mode provides the service processing centre with an up-to-date list of air tickets that it offers, in this case the parameters may include:
- for each air ticket - destination, trip number, flight itinerary (in case this flight has intermediate stops), date, time and place of departure, service class, ticket price;
- for each trip - the number of available seats for said trip and additionally identifying parameters of the passengers who have already bought a ticket including the features corresponding to their wishes regarding a seat in the cabin.

The Buyer identifies oneself by means of the Interface for Interaction with the Air Carrier, which sends to the service processing centre a request for ticket issuance. After receiving the air ticket list the Interface for Interaction at the first stage displays a list of parameters contained in this list. The Buyer selects from this list a flight destination, mentions a desired date of flight and finally selects a particular trip selecting at the same time a desired service class. Afterwards, the Interface for Interaction composes and provides to the service processing centre a respective message being an order for purchase from the air carrier of air tickets selected by the buyer with an indication of their respective number. Apart from that, the Interface for Interaction incorporates in this message the personal data of the buyer received as a result of the aforementioned identification of the buyer. Upon receipt of said message the service processing centre accepts this order. In this case the parameters of this order, as stated, include at least the value of this order and/or an identifier of this order. The buyer makes a payment for this order through the Interface for Interaction being used.

After paying for the ticket a passenger (a natural person who bought an air ticket or a ticket for other vehicle) is provided with an option of selecting a seat for oneself in the cabin of the vehicle depending on the preferences of the passenger regarding both the seat and a potential travelling companion next to whom he will be seated.

On the website or in the mobile application of the carrier the passenger by putting a tick respectively in a web form gives one's consent not for a manual selection of a seat during the trip check-in, but for using an automatic seat selection method for several passengers for purposes of particular trip.

The Technical solution is a software product deployed on the server having an Internet access. The Technical solution has an application programming interface (API) for an automatic processing of the carrier's requests and an Account in which the carrier can view the statistics of its requests, change basic settings etc.

Afterwards, the passenger fills in a short web form in the fields of which any features (hereinafter to be referred to as attributes) pertaining to a seat in the cabin can be mentioned, such as
- technical features:
   1. a window seat;
   2. an aisle seat;
   3. a seat in the middle of a row;
   4. a seat in the front part of the cabin;
   5. a seat in the rear part of the cabin;
   6. a seat along the movement path;
   7. a seat next to the table
- anthropological features:
   1. sex of a travelling companion;
   2. age of a travelling companion;
   3. a presence/absence of children beside the travelling companion
- behavioural features:
   1. I prefer an undisturbed flight;
   2. I prefer communication/interaction

The data entered by the passenger through this form are stored on the server of the carrier.

After collecting the data about passengers the carrier sends to the Technical solution server via the application programming interface (API) a request containing information about passengers, attributes, configuration of the cabin of the vehicle with an indication of available seats, as well as other relevant information. Said request is sent by POST method HTTP protocol with the data in JSON format. Data is exchanged in UTF-8 Unicode transformation format.

After receiving the aforementioned information the technical solution launches an algorithm for analysis of the features available in the library in terms of their correspondence to each other. An arrangement core compares the similar attributes taking into account information about configuration of the cabin of the vehicle and the seats available for booking.

After performing all the estimations and selecting the best option for passenger arrangement the Technical solution selects for each passenger who made use of the automatic seat selection method a certain seat in the cabin of a respective vehicle.

The Technical solution sends to the carrier a reply to the request which contains information about passenger arrangement, as well as other statistical data (a percentage ratio of satisfying initial wishes of each passenger individually and for the entire cabin on average). The carrier in its Account can receive in a graphical form the information about each estimation performed.

Thus, the known method for ticket booking is provided with an enlargement of the toolbox of technical means by taking into account the preferences of the passengers regarding the location of a seat in the cabin (the compartment) and regarding the characteristics of the closest travelling companions, and the known booking systems are provided with the means that implement this task.

## Claims

1. A method for automated selection of travelling companions when buying transport tickets comprising entering a ticket list offered by a carrier into a computer system of a processing centre in a booking system comprising at least one processing centre, one or more interfaces for interaction, viewing said list by the buyers, their identifying themselves and making a payment for the ticket for the selected trip by means of the interface for interaction, **characterized in that** the ticket list entered to the computer system of the processing centre contains details of the passengers who have already bought tickets for a particular trip, and after paying for the ticket the passenger enters to the processing centre by means of the interface for interaction the information about their preferences regarding the location in the cabin taking into account the information about the seat including details of the companions in the cabin, after completing the process of accepting orders for the trip the processing centre performs arranging of seats in the cabin which correspond to the greatest extent possible to the preferences (parameter values) that are indicated in the order, and communicates seat information to the buyer.

2. A device for automated selection of travelling companions when buying transport tickets which comprises an interface for interaction of the buyer with a booking system and a processing centre that comprises
1) a processor configured to:
- accept an inquiry related to the travel, wherein the inquiry related to the travel is related to multiple passengers;
- determine multiple sets of attributes based on the inquiry related to the travel, wherein each of multiple sets of attributes is related to one of multiple passengers;
- provide at least one itinerary for each of multiple passengers, based on the search;
2) a syntax analyser interacting with the processor and configured to:
- analyse the inquiry related to the travel in order to obtain values for the attributes related to multiple sets of attributes;
3) a scheduler connected to the processor and configured to:
- search for each of multiple passengers for possible travel itineraries, wherein the scheduler connected to the processor can analyse the features available in the library in terms of their correspondence to each other and comprises an arrangement core to compare similar attributes taking into account information about configuration of the cabin of the vehicle and the seats available for booking in order to determine a seat in the cabin which to the greatest extent possible corresponds to those preferences (parameter values) that the passenger indicated in the order - at least one attribute and one of the preferences of the user.
